# EUROPÄISCHE PATENTSCHRIFT

(11) **EP 1 103 706 B1**
(45) Veröffentlichungstag und Bekanntmachung des Hinweises auf die Patenterteilung: **21.11.2007**
(21) Anmeldenummer: 00120425.4
(22) Anmeldetag: 18.09.2000
(51) Int. Cl.: F01D 25/18, F01D 25/16, F02C 7/06, F01D 9/06

(54) **Lagerkammer für ein Gasturbinen-Triebwerk**
Bearing chamber for a gas turbine engine
Chambre pour un palier d'une turbine à gaz

(30) Priorität: 26.11.1999 DE 19956919
(43) Veröffentlichungstag der Anmeldung: 30.05.2001
(73) Patentinhaber: Rolls-Royce Deutschland Ltd & Co KG, 15827 Dahlewitz (DE)
(72) Erfinder: Böck, Alexander, 82288 Kottgeisering (DE)
(74) Vertreter: Weber, Joachim

(56) Entgegenhaltungen:
- FR-A- 2 621 970
- GB-A- 1 582 209
- GB-A- 2 125 118
- US-A- 2 951 337
- US-A- 4 645 415
- US-A- 4 709 545
- US-A- 5 611 661

## Beschreibung

Die Erfindung betrifft ein Gasturbinen-Triebwerk mit einer mittels Dichtelementen abgedichteten, im Turbinen-Innenraum vorgesehenen Lagerkammer für eine Turbinenwelle und mit einer Abfuhrleitung für das in die Lagerkammer zugeführte, insbesondere direkt auf das oder die darin angeordnete(n) Lager aufgespritzte Schmieröl. Zum technischen Umfeld wird beispielshalber auf die EP 0 127 563 B1 verwiesen.

Lagerkammern für eine oder auch mehrere Wellen eines Gasturbinen-Triebwerkes, insbesondere einer Flug-Gasturbine, sind in unterschiedlichen Ausführungsformen bekannt. Insbesondere an der auf der heißen Turbinenseite des Triebwerkes liegenden Lagerkammer sind dabei spezielle Maßnahmen vorzusehen, mit Hilfe derer ein Austreten von Lagerkammer-Schmieröl in den mit relativ heißer Sperrluft befüllten Turbinen-Innenraum verhindert werden kann. Andernfalls könnte sich nämlich austretendes Schmieröl im Turbinen-Innenraum insbesondere an den die Turbinenschaufeln tragenden Laufscheiben des Turbinenteiles des Gasturbinen-Triebwerkes entzünden und diese dadurch schädigen. Üblicherweise ist daher auf der der Lagerkammer abgewandten Seite jedes Dichtelementes ein sog. Sperrluftsystem, bestehend aus einer Sperrluftkammer und einer Absaugkammer, vorgesehen. In die Sperrluftkammer wird ein Luftstrom eingeleitet, so daß sich hier ein Druck aufbaut, der größer ist als der in der Sperrluftkammer benachbarten Absaugkammer herrschende Druck. Dabei wird üblicherweise der in die Sperrluftkammern eingeleitete sog. Sperrluftstrom ebenso wie die in den Turbinen-Innenraum eingeleitete Sperrluft einer Kompressorstufe des dem Turbinenteil sowie der Brennkammer des Gasturbinen-Triebwerkes vorgeschalteten Verdichters entnommen.

Bekanntlich (und wie bereits erwähnt) werden die Lagerkammern von Gasturbinen-Triebwerken kontinuierlich mit Schmieröl durchströmt, d.h. es wird kontinuierlich frisches bzw. abgekühltes Schmieröl auf das oder die in der Lagerkammer befindliche(n) Lager aufgespritzt, welches danach auch wieder aus der Lagerkammer abgeführt und einem Sammelbehälter zugeführt wird. Üblicherweise sind hierfür im bekannten Stand der Technik mehrere Abfuhrleitungen vorgesehen, die über dem Umfang der oftmals einen relativ großen Durchmesser aufweisenden ringförmigen Lagerkammer gleichmäßig verteilt in diese münden. Die Abfuhrleitungen werden dabei durch den Turbinen-Innenraum hindurch nach außen geführt, da nur dort außerhalb die Wiederaufarbeitung und das Pumpen zur erneuten Verwendung des Schmieröles erfolgen kann. Dabei kreuzen die Abfuhrleitungen auch den Strömungskanal des Triebwerkes, in welchem sich das heiße, zuvor in der Triebwerks-Brennkammer verbrannte Arbeitsgas der Gasturbine befindet.

Würde nun eine solche Abfuhrleitung im Bereich dieses Arbeitsgas-Strömungskanales brechen, so könnte theoretisch über diese Bruchstelle und somit durch diese Abfuhrleitung hindurch heißes Arbeitsgas in die Lagerkammer gelangen. Dies wird im bekannten Stand der Technik dadurch verhindert, daß der in der Lagerkammer herrschende Druck zumindest so hoch eingestellt wird, wie der im Kreuzungsbereich zwischen Strömungskanal und Abfuhrleitung herrschende Druck im Strömungskanal ist, so daß zwischen diesem Abschnitt des Strömungskanales und dem Lagerkammer-Innenraum kein positives Druckgefälle vorliegt. Dies wird dadurch erreicht, daß aus den Sperrluftkammern kontinuierlich und dabei von den genannten Dichtelementen gedrosselt ein geringer Luftstrom in die Lagerkammer gelangen kann, sowie durch in die Abfuhrleitung eingebaute Blenden außerhalb des Kern-Triebwerkes der Gasturbine.

Dies ist jedoch insofern nachteilig, als hierdurch kontinuierlich ein relativ großer Sperrluftstrom benötigt wird, d.h. es muß Sperrluft vom dem Turbinenteil des Triebwerks vorgeschalteten Verdichter abgezweigt werden, was sich negativ auf den Gesamt-Wirkungsgrad des Gasturbinen-Triebwerkes auswirkt. Im übrigen ist der bauliche Aufwand für die Sperrluftsysteme mit Zuführleitungen und Entlüftungskanälen für die Absaugkammern erheblich

Die US-A-4 645 415 beschreibt einen Lageraufbau, bei welchem eine nicht dargestellte Rückführleitung für Schmieröl vorgesehen ist. Im Übrigen beschäftigt sich die Druckschrift intensiv mit der Zuführung von Kühlluft zu dem Lagerraum sowie der dort herrschenden Temperatur, um eine Überhitzung zu vermeiden. Es werden auch Angaben zum jeweiligen Druck der Kühlluft angegeben. Maßnahmen zur Realisierung dieser Drücke werden nicht beschrieben.

Die GB-A-1 582 209 gibt zwar Hinweise auf die Druckverteilung in der Lagerkammer. Diese spezielle Druckverteilung ergibt sich jedoch durch die Luft-Dichtungs-Verhältnisse, nicht jedoch durch die Dimensionierung einer Abschluss- oder Abfuhrleitung für Öl.

Ein weiteres Gasturbinen-Triebwerk ist aus der US-A-4 709 545 vorbekannt. Hierbei ist eine Konstruktion beschrieben, welche sich lediglich auf die Wärmeisolierung des Lagerraums bezieht. Hierzu wird auf die Zuführung von heißer Luft und auf entsprechende Isoliermaßnahmen eingegangen. Die Druckschrift beschreibt jedoch nicht eine Abfuhrleitung für Öl sowie die zugehörigen Dimensionierungen.

Die US-A-2 951 337 beschreibt die Drücke in den jeweiligen Lagerkammern, sie gibt jedoch keinerlei Hinweis auf die Dimensionierung einer Ölabfuhrleitung.

Aus der GB-A-2 125 118 ist eine siphonartige Dichtung beschrieben. Eine ähnliche Dichtung beschreibt auch die FR-A-2 621 970.

Der Erfindung liegt die Aufgabe zugrunde, ein Gasturbinentriebwerk der eingangs genannten Art zu schaffen, welches bei einfachem Aufbau und einfacher, kostengünstiger Herstellbarkeit unter Vermeidung der Nachteile des Standes der Technik einen hohen Wirkungsgrad aufweist.

Die Lösung dieser Aufgabe ist dadurch gekennzeichnet, daß die in einem geeigneten Schmieröl-Sammelraum mündende einzige Abfuhrleitung hinsichtlich ihres Querschnittes derart dimensioniert ist und die Dichtelemente eine derart große Dichtwirkung zeigen, daß der Druck in der Lagerkammer im wesentlichen gleich demjenigen im Schmieröl-Sammelraum ist und maximal halb so hoch wie derjenige im Turbinen-Innenraum ist. Vorteilhafte Aus- und Weiterbildungen sind Inhalt der Unteransprüche.

Ein wesentliches erfindungsgemäßes Merkmal ist, daß der sich unter üblichen Betriebsbedingungen des Triebwerkes in der Lagerkammer einstellende Druck bzw. Absolut-Druck erheblich geringer ist als derjenige im Turbinen-Innenraum in welchem sich die Lagerkammer befindet. Durch Auswahl geeigneter, eine große Dichtwirkung zeigender Dichtelemente im Durchtrittsbereich der Turbinenwelle durch die Lagerkammer-Wand kann in der Lagerkammer nun ein Druckniveau in der Größenordnung von 1,5 bar eingestellt werden, was betragsmäßig lediglich ein Drittel des Druckwertes im umgebenden Turbinen-Innenraum ist. Aufgrund dieses Druckgefälles ist sichergestellt, daß bei Versagen eines Dichtelementes aus der Lagerkammer kein Schmieröl austreten kann. Es müssen daher keine weiteren Maßnahmen vorgesehen werden, die ein Auftreffen von aus den Lagerkammern austretendem Schmieröl auf die sich im Turbinen-Innenraum befindenden Turbinenscheiben verhindern.

Dabei werden diese Vorteile auch bereits dann erzielt bzw. die weiter oben genannten Nachteile in erheblichem Umfang auch dann vermieden, wenn der Absolut-Druck in der Lagerkammer betragsmäßig maximal halb so hoch wie derjenige Turbinen-Innenraum ist.

Der genannte Druckunterschied zwischen der Lagerkammer und dem Turbinen-Inneraum wird aber nicht nur durch zwischen diesen Kammern vorgesehene Dichtelemente mit hinreichend großer Dichtwirkung erzielt, sondern auch dadurch, daß die Abfuhrleitung, über welche das Schmieröl aus der Lagerkammer in einen sog. Schmieröl-Sammelraum geführt wird, mit einem derartig großen Querschnitt ausgebildet und mit einer großen Blende ausgestattet wird, daß sich in der Lagerkammer betragsmäßig im wesentlichen der gleiche Druck einstellt wie im Schmieröl-Sammelraum. Im Sinne einer vorteilhaften Funktionsvereinigung kann es sich bei diesem im übrigen um einen üblichen sog. Geräteträger (d.h. die Accessory Gearbox) handeln, der/die außerhalb des Triebwerksgehäuses, welches die Kanalaußenwand für das Arbeitsgas des Triebwerkes bildet, angeordnet ist, und die ein Triebwerks-Hilfsgetriebe enthält.

Allerdings könnte nun bei Umsetzung der bislang beschriebenen Maßnahmen die bereits beschriebene Gefahr eines Lagerkammerbrandes bestehen, wenn eine der im bekannten Stand der Technik üblicherweise mehrfach vorhandenen Abfuhrleitungen im Turbinen-Innenraum im Bereich des Arbeitsgas-Strömungskanales bricht, da dann heißes Arbeitsgas über die Bruchstelle in die gebrochene Abfuhrleitung gelangen und durch diese hindurch aufgrund des vorliegenden Druckgefälles in die Lagerkammer strömen würde, aus welcher dieses Arbeitsgas dann durch die andere heile, nicht gebrochene Abfuhrleitung wieder abgeführt werden könnte. Ein unvermeidlicher Lagerkammerbrand wäre die Folge eines derartigen Durchströmens der Lagerkammer mit heißem Turbinen-Arbeitsgas. Um diese Gefahr nun abzuwenden, wird erfindungsgemäß weiterhin vorgeschlagen, lediglich eine einzige Abfuhrleitung vorzusehen.

Bei einem (grundsätzlich ohnehin unwahrscheinlichen) Bruch dieser einzigen Abfuhrleitung kann zwar ebenfalls heißes Arbeitsgas in die Lagerkammer gelangen, jedoch nur eben soviel, bis darin ein gleich hoher Druck wie im besagten Turbinen-Innenraum aufgebaut ist. Danach strömt das Arbeitsgas aus dem Strömungskanal über die Bruchstelle durch die Abfuhrleitung in Richtung zum Schmieröl-Sammelbehälter, kühlt sich dabei jedoch soweit ab, daß in diesem das Schmieröl nicht entzündet wird. Nicht vermeiden läßt sich allerdings ein Brand des aus der Lagerkammer durch die (gebrochene) Abfuhrleitung abgeführten Schmieröles, jedoch findet dieser innerhalb der gebrochenen Abfuhrleitung und dabei außerhalb des Bereichs der Turbinenscheiben statt, und kann daher als relativ unkritisch eingestuft werden. Selbst wenn sich also bereits das in der Lagerkammer enthaltene Schmieröl aufgrund der relativ geringen Menge von über die gebrochene Abfuhrleitung in die Lagerkammer hineinströmenden Arbeitsgas entzünden sollte, so wird sich dieses Feuer zusammen mit dem weiterhin aus der Lagerkammer abgeführten Schmieröl in die erfindungsgemäß einzige Abfuhrleitung hinein verlagern.

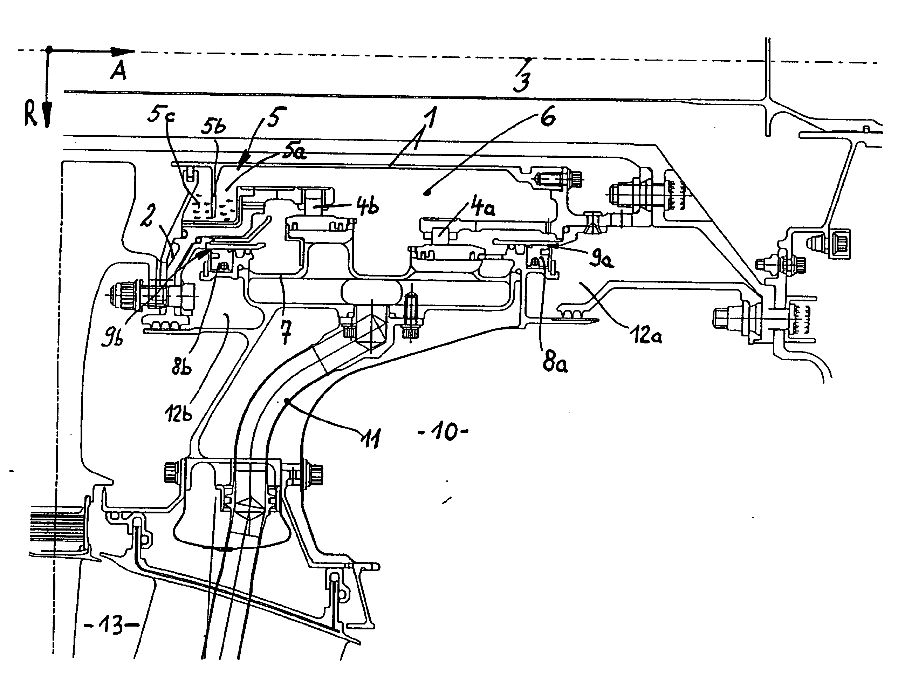

Im folgenden wird die Erfindung anhand eines bevorzugten Ausführungsbeispieles weiter erläutert, wobei die beigefügte einzige Figur einen HalbSchnitt durch eine Lagerkammer mit entsprechender Umgebung eines erfindungsgemäßen Gasturbinen-Triebwerkes zeigt. Eine Besonderheit ist hier, daß den beiden Dichtelementen der Lagerkammer jeweils eine zusätzliche sog. Pufferkammer vorgelagert ist, wobei diese Pufferkammern über nicht dargestellte Rohrleitungen (nicht gezeigt) miteinander verbunden sind. Da hierdurch in den beiden Pufferkammern der gleiche Druck herrscht, wird hierdurch eine weitere Sicherheir gegen das Austreten von Öl im Falle des Versagens einer Dichtung geboten. In diesem Zusammenhang sei ausdrücklich darauf hingewiesen, daß das beschriebene System auch ohne diese Pufferkammern funktioniert.

Eine weitere Besonderheit dieser Lagerkammer besteht dabei darin, daß in dieser zwei Lager angeordnet sind, von denen eines für die Hochdruck-Turbinenwelle und das andere für die Niederdruck-Turbinenwelle des Triebwerkes vorgesehen ist, wodurch sich eine äußerst kompakte und einfache Bauweise ergibt. Dabei ist es jedoch erforderlich, auch zwischen diesen beiden Wellen eine besonders dichte Dichtungsanordnung vorzusehen, so daß das bereits genannte Druckgefälle zwischen der Lagerkammer und dem Turbinen-Innenraum, in dem bekanntermaßen Sperrluft anzutreffen ist, sicher gehalten werden kann. Diese besondere Dichtungsanordnung zwischen den beiden Wellen kann in Form einer hydraulischen Dichtung nach Art eines Siphons ausgebildet sein, bspw. so wie sie in der nicht vorveröffentlichten deutschen Patentanmeldung mit dem Aktenzeichen 199 16 803.2 beschrieben ist. In diesem Zusammenhang sei noch darauf hingewiesen, daß sämtliche näher beschriebenen Merkmale des im folgenden erläuterten bevorzugten Ausführungsbeispieles erfindungswesentlich sein können.

Mit der Bezugsziffer 1 ist die erste Turbinenwelle und mit der Bezugsziffer 2 die zweite Turbinenwelle eines Zweiwellen-Gasturbinen-Flugtriebwerks bezeichnet, die beide mit unterschiedlicher Geschwindigkeit und somit auch relativ zueinander (dabei aber bevorzugt im gleichen Drehsinn) um die Rotationsachse 3 dieses Triebwerks rotieren. Wie üblich sind diese Wellen 1, 2, von denen jeweils lediglich ein Teilabschnitt dargestellt ist, konzentrisch zueinander angeordnet, wobei die erste Turbinenwelle 1 die Niederdruck-Turbinenwelle darstellt und somit innerhalb der zweiten Turbinenwelle 2, welche die Hochdruck-Turbinenwelle ist, angeordnet ist. Unter der Bezugsziffer 2a erkennt man im übrigen einen Teil einer Turbinenscheibe der Hochdruck-Turbinenwelle 2.

Die Hochdruck-Turbinenwelle 2 ist im Bereich ihres hinteren Endes, d.h. im Turbinenteil des Gasturbinen-Triebwerkes, über ein Lager 4b gelagert, welches als Wälz-Loslager ausgebildet ist. Linksseitig der Figurendarstellung schließt sich somit an die Turbinenscheibe 2a eine weitere Turbinenscheibe an (fakultativ), worauf (wie üblich) eine Triebwerks-Brennkammer folgt, jenseits derer sich die Hochdruck-Turbinenwelle 2 mit den Laufscheiben eines Hochdruck-Verdichters des Gasturbinen-Triebwerkes fortsetzt. Zurückkommend zum figürlich dargestellten Bereich ist auch die Niederdruck-Turbinenwelle 1, die sich zu beiden Seiten der Figurendarstellung fortsetzt, über ein Lager 4a gelagert. Dabei sind die beiden Lager 4a, 4b in einer gemeinsamen Lagerkammer 6 angeordnet, die einerseits von den beiden Turbinenwellen 1, 2 und andererseits von einem unbeweglichen Wandabschnitt 7 des Gasturbinen-Triebwerkes begrenzt wird. Selbstverständlich stellt sich dieser Wandabschnitt 7 in Richtung der Rotationsachse 3, d.h. in Axialrichtung A des Triebwerkes betrachtet als Kreisring dar, so daß sich die kreisringförmigen Wälz-Lager 4a, 4b mit ihren Außenringen vollflächig am festen Wandabschnitt 7 abstützen können.

Dieser Wandabschnitt 7 ist an seinem in Axialrichtung A betrachtet vorderen sowie hinterem Ende jeweils mit einer geeigneten, nicht näher bezeichneten Aufnahme für ein Dichtelement 8a bzw. 8b versehen. Diese beiden ebenfalls kreisringförmigen Dichtelemente 8a, 8b sind als sog. radiale Segmentdichtungen ausgebildet und stützen sich einerseits am Wandabschnitt 7 und andererseits jeweils auf einem geeigneten Flächenabschnitt einer der beiden Turbinenwellen 1, 2 ab, so daß das Dichtelement 8a den Ringspalt 9a zwischen dem Wandabschnitt 7 und der Niederdruck-Turbinenwelle 1 abdichtet, während das Dichtelement 8b den Ringspalt 9b zwischen dem Wandabschnitt 7 und der Hochdruck-Turbinenwelle 2 abdichtet. In den Bereichen dieser beiden Dichtelemente 8a, 8b ist die bereits genannte Lagerkammer 6 somit gegenüber der außerhalb des kreisringförmigen Wandabschnittes 7 liegenden Umgebung abgedichtet.

Zur vollständigen Abdichtung der Lagerkammer 6 gegenüber dem Turbinen-Innenraum 10 ist, wie aus der Figurendarstellung klar ersichtlich wird, aufgrund der Tatsache, daß hier zwei Wellen 1, 2 in bzw. über diese Lagerkammer 6 gelagert sind, noch eine weitere Abdichtung zwischen diesen beiden Turbinenwellen 1, 2 erforderlich. Diese ist als eine in ihrer Gesamtheit mit der Bezugsziffer 5 bezeichnete hydraulische Dichtungsanordnung zwischen den beiden Wellen 1, 2 ausgebildet.

Zusammenfassend wird diese hydraulische Dichtungsanordnung 5 im wesentlichen durch einen an der Innenseite der Hochdruck-Turbinenwelle 2 vorgesehenen und sich dabei über deren Umfang in Radialrichtung R nach außen erstreckenden Ringraum 5a gebildet, in den ein an der innen liegenden Niederdruck-Turbinenwelle 1 vorgesehener, über deren Umfang sich ebenfalls in Radialrichtung R nach außen erstreckender Steg 5b hineinragt. Ein großer Teil des Ringraumes 5a und insbesondere derjenige Teilbereich desselben, in welchem das freie Ende des Steges 5b liegt, ist bzw. wird mit Schmieröl 5c aus dem Ölkreislauf des Triebwerks befüllt, und zwar aus der Lagerkammer 6 heraus. Aufgrund der Rotation der beiden Wellen 1, 2 und der damit verbundenen Fliehkrafteffekte lagert sich nämlich das in die Lagerkammer 6 eingebrachte Schmieröl 5c wie dargestellt auch an der bezüglich des Zwischenraumes zwischen den Wellen 1 und 2 radial außen liegenden Innenwand der Hochdruckwelle 2 an. Somit gelangt - ebenfalls unter Fliehkrafteinfluß - das Schmieröl 5c auch in den in der Welle 2 vorgesehenen Ringraum 5a, der gegenüber demjenigen Bereich der Innenwand, über welchen das Schmieröl 5c aus der Lagerkammer 6 zur hydraulischen Dichtungsanordnung hingeführt wird, in Radialrichtung R betrachtet erheblich weiter außen liegt. Dabei sammelt sich das Schmieröl 5c im Ringraum 5a sowohl linksseitig als auch rechtsseitig des Steges 5b an, so daß hierdurch - wie ersichtlich - nach Art eines Siphons eine optimale hydraulische Abdichtung entsteht.

Dabei sei an dieser Stelle ausdrücklich darauf hingewiesen, daß die beschriebene hydraulische Dichtungsanordnung 5 oder eine andersartige Dichtungsanordnung zusätzlich zu den beiden Dichtelementen 8a, 8b selbstverständlich nur dann erforderlich ist, wenn wie hier gezeigt zwei Wellen 1, 2 in bzw. an einer gemeinsamen Lagerkammer 6 gelagert sind. Ist hingegen einer Lagerkammer nur eine einzige Welle zugeordnet, so wie dies bspw. in der eingangs genannten EP 0 127 563 B1 gezeigt ist, so sind für eine vollständige Abdichtung der Lagerkammer 6 gegenüber deren Umgebung bzw. gegenüber dem Turbinen-Innenraum selbstverständlich die beiden Dichtelemente 8a, 8b ausreichend.

Es wurde bereits erwähnt, daß in die Lagerkammer 6 kontinuierlich Schmieröl aus dem Ölkreislauf des Triebwerks eingeleitet wird, und zwar zur Schmierung und insbesondere zur Kühlung der beiden Lager 4a, 4b. Auf nicht näher dargestellte Weise wird das Schmieröl dabei auf die beiden Lager 4a, 4b gespritzt. Selbstverständlich ist es damit erforderlich, auch wieder kontinuierlich Schmieröl aus der Lagerkammer 6 abzuziehen. Hierfür ist eine in der Lagerkammer 6 mündende Abfuhrleitung 11 vorgesehen, die mit ihrem der Lagerkammer 6 gegenüberliegenden, hier nicht dargestellten Endabschnitt in einem (ebenfalls nicht gezeigten) Schmieröl-Sammelbehälter mündet. Bei diesem kann es sich bspw. - wie in der Beschreibungseinleitung bereits erläutert wurde - um den Geräteträger, d.h. die Gearbox des Gasturbinen-Triebwerkes handeln.

Wie in der Beschreibungseinleitung bereits ausgeführt wurde, muß die Lagerkammer 6 vollständig so gut als möglich gegenüber deren Umgebung abdichtet sein, um zu verhindern, daß Schmieröl aus der Lagerkammer 6 in den Turbinen-Innenraum 10 gelangt. Zur absoluten Sicherstellung der Dichtfunktion der Dichtelemente 8a, 8b ist diesen daher auf ihrer der Lagerkammer 6 abgewandten Seite jeweils eine Pufferkammer 12a bzw. 12b vorgelagert. Die beiden Pufferkammern 12a, 12b sind über nicht dargestellte Rohrleitungen miteinander verbunden, so daß in ihnen gleicher Druck herrscht. Damit wird verhindert, daß sich bei Versagen eines Dichtelementes 8a oder 8b der in der Lagerkammer 6 herrschende Druck soweit erhöht, daß sich am anderen noch intakten Dichtelement 8b oder 8a die Druckrichtung ändert, so daß über dieses Dichtelement Öl austreten könnte. Wie üblich wird in die Pufferkammer 12a, 12b ein Luftstrom eingeleitet, der einer Kompressorstufe des dem Turbinenteil sowie der Brennkammer des Gasturbinen-Triebwerkes vorgeschalteten Verdichters entnommen wird (nicht dargestellt).

Wie weiter oben vor dieser Beschreibung des bevorzugten Ausführungsbeispieles bereits erläutert wurde, ist nun der sich unter üblichen Betriebsbedingungen des Triebwerkes in der Lagerkammer 6 einstellende Druck bzw. Absolut-Druck erheblich geringer ist als derjenige im Turbinen-Innenraum 10, in dem sich neben der Lagerkammer 6 u.a. auch die Turbinenscheiben befinden. Beispielsweise kann der Absolut-Druck im Turbinen-Innenraum 10 sowie in den Pufferkammern 12a, 12b in der Größenordnung von 4 bar bis 4,5 bar liegen. Wenn nun die Dichtelemente 8a, 8b eine große Dichtwirkung zeigen - (die hydraulische Dichtungsanordnung 5 ist gegenüber einem Luftübertritt ohnehin absolut dicht) -, so kann in der Lagerkammer 6 ein Druckniveau in der Größenordnung von 1,5 bar eingestellt werden, was betragsmäßig lediglich ein Drittel des Druckwertes in den Pufferkammern 12a, 12b bzw. im Turbinen-Innenraum 10 ist. Somit ist auch bei Versagen eines Dichtelementes 8a oder 8b jeglicher Schmieröl-Austritt aus der Lagerkammer 6 ausgeschlossen.

Der genannte Druckunterschied zwischen der Lagerkammer 6 und dem Turbinen-Innenraum 10 bzw. den Pufferkammern 12a, 12b wird aber nicht nur durch die Dichtelemente 8a, 8b mit hinreichend großer Dichtwirkung erzielt, sondern auch dadurch, daß die Abfuhrleitung 11, über welche das Schmieröl aus der Lagerkammer 6 in den bereits genannten Schmieröl-Sammelraum geführt wird, mit einem derartig großen Querschnitt bzw. großen Blende ausgebildet wird, daß sich in der Lagerkammer 6 betragsmäßig im wesentlichen der gleiche Druck einstellt wie im Schmieröl-Sammelraum.

Wie ersichtlich ist, ist die Abfuhrleitung 11 durch den Turbinen-Innenraum 10 nach außen geführt. Bei einem grundsätzlich ohnehin unwahrscheinlichen Bruch dieser Abfuhrleitung 11 im Bereich des lediglich bruchstückhaft dargestellten, die heißen Turbinen-Arbeitsgase führenden Strömungskanales 13 kann nun eine geringe Menge von heißem Arbeitsgas aus dem Strömungskanal 13 in die Lagerkammer 6 gelangen. Wie in der Beschreibungseinleitung bereits erläutert wurde, ist diese Menge jedoch äußerst gering, da (im Sinne eines erfindungswesentlichen Merkmales) lediglich eine einzige derartige Abfuhrleitung 11 (selbstverständlich bezogen auf eine einzelne Lagerkammer 6) vorgesehen ist. Somit gelangt im Falle eines Bruches dieser einzigen Abfuhrleitung 11 maximal soviel heißes Arbeitsgas in die Lagerkammer 6, bis darin ein gleich hoher Druck wie im Strömungskanal 13 aufgebaut ist. Danach strömt das Arbeitsgas über die Bruchstelle der Abfuhrleitung 11 durch diese hindurch in Richtung zum Schmieröl-Sammelbehälter, kühlt sich dabei jedoch soweit ab, daß in diesem das Schmieröl nicht entzündet wird. Nicht vermeiden läßt sich allerdings ein Brand des aus der Lagerkammer 6 durch die (gebrochene) Abfuhrleitung 11 abgeführten Schmieröles, jedoch findet dieser innerhalb der gebrochenen Abfuhrleitung 11 abseits des Turbinen-Innenraumes 10 statt und kann daher als relativ unkritisch eingestuft werden.

In diesem Zusammenhang ist ein weiterer Vorteil eines erfindungsgemäßen Gasturbinen-Triebwerkes zu nennen, der darin besteht, daß ein erfolgter Bruch der Abfuhrleitung 11 schnell und einfach erkannt werden kann. Die bereits beschriebene aus einem derartigen Bruch resultierende Druckerhöhung in der Lagerkammer 6 überträgt sich nämlich auf den Schmieröldruck, welcher üblicherweise laufend überwacht wird. Das gezeigte Gasturbinen-Triebwerk ist somit hinsichtlich eines Lagerkammerbrandes bzw. Bruches der Abfuhrleitung 11 ebenso sicher wie der bekannte Stand der Technik, zeichnet sich jedoch unter normalen Betriebsbedingungen durch einen vorteilhaften relativ geringen Druck in der Lagerkammer aus. Dabei sei ausdrücklich darauf hingewiesen, daß eine Vielzahl von Details insbesondere konstruktiver Art durchaus abweichend vom gezeigten Ausführungsbeispiel gestaltet sein können, ohne den Inhalt der Patentansprüche zu verlassen.

### Bezugszeichenliste:

- 1: Niederdruck-Turbinenwelle
- 2: Hochdruck-Turbinenwelle
- 3: Rotationsachse
- 4a: Lager (von 1)
- 4b: Lager (von 2)
- 5: hydraulische Dichtungsanordnung
- 5a: Ringraum
- 5b: Steg
- 5c: Schmieröl
- 6: Lagerkammer
- 7: Wandabschnitt
- 8a,b: Dichtelement
- 9a,b: Ringspalt
- 10: Turbinen-Innenraum
- 11: Abfuhrleitung
- 12a,b: Pufferkammer
- 13: Arbeitsgas-Strömungskanal
- A: Axialrichtung
- R: Radialrichtung

## Patentansprüche

1. Gasturbinen-Triebwerk mit einer mittels Dichtelementen (8a, 8b) abgedichteten, im Turbinen-Innenraum (10) vorgesehenen Lagerkammer (6) für eine Turbinenwelle (1, 2), und mit einer Abfuhrleitung (11) für das in die Lagerkammer (6) zugeführte, insbesondere direkt auf das oder die darin angeordnete(n) Lager (4a, 4b) aufgespritzte Schmieröl, **dadurch gekennzeichnet, daß** die in einem geeigneten Schmieröl-Sammelraum mündende einzige Abfuhrleitung (11) hinsichtlich ihres Querschnittes derart dimensioniert ist und die Dichtelemente (8a, 8b) eine derart große Dichtwirkung zeigen, daß der Druck in der Lagerkammer (6) im wesentlichen gleich demjenigen im Schmieröl-Sammelraum ist und maximal halb so hoch wie derjenige im Turbinen-Innenraum (10) ist.

2. Gasturbinen-Triebwerk nach Anspruch 1 mit zwei in der Lagerkammer (6) angeordneten Lagern (4a, 4b), von denen eines für die Hochdruck-Turbinenwelle (2) und das andere für die Niederdruck-Turbinenwelle (1) des Triebwerkes vorgesehen ist,
und wobei zwischen diesen beiden Wellen (1, 2) eine hydraulische Dichtungsanordnung (5) vorgesehen ist, bei welcher die in Radialrichtung (R) bezüglich der Wellen-Rotationsachse (3) außen liegende Hochdruck-Turbinenwelle (2) einen sich über ihrem Umfang radial nach außen erstrekkenden Ringraum (5a) aufweist, in welchen die in Radialrichtung (R) bezüglich der Wellen-Rotationsachse (3) innen liegende Niederdruck-Turbinenwelle (1) mit einem über ihren Umfang radial nach außen gerichteten Steg (5b) hineinragt und der nach Art eines Siphons zumindest im Bereich des freien Endes des Steges (5b) bei Rotation der Turbinenwellen über einen Eintrittsbereich unter Fliehkraftwirkung mit Schmieröl (5c) aus der Lagerkammer (6) befüllt wird.

## Claims

1. Gas-turbine engine with a bearing chamber (6) for a turbine shaft (1, 2), this bearing chamber being provided in the turbine interior (10) and sealed by sealing elements (8a, 8b), and with a scavenge line (11) for the lubricating oil supplied to the bearing chamber (6), in particular directly sprayed onto the bearing(s) (4a, 4b) arranged therein, **characterized in that** the cross-section of the single scavenge line (11) leading to a suitable lubricating-oil collecting compartment is appropriately sized and the sealing elements (8a, 8b) provide such a high sealing effect that the pressure in the bearing chamber (6) is essentially equal to the pressure in the lubricating-oil collecting compartment and maximally half the pressure in the turbine interior (10).

2. Gas-turbine engine in accordance with Claim 1, with two bearings (4a, 4b) arranged in the bearing chamber (6) of which one is provided for the high-pressure turbine shaft (2) and the other for the low-pressure turbine shaft (1) of the engine, with a hydraulic sealing arrangement (5) being provided between these two shafts (1, 2) in which the high-pressure turbine shaft (2), which, in the radial direction R, lies on the outside when viewed with reference to the shaft rotational axis (3), features an annulus (5a) extending radially outward about its circumference, into which the low-pressure turbine shaft (1), which, in the radial direction R, lies on the inside when viewed with reference to shaft rotational axis (3), projects with a radially outward web (5b), said annulus being filled siphon-fashion with lubricating oil (5c) from the bearing chamber (6) at least in the area of the free end of the web (5b) via an inlet area under centrifugal effect as the turbine shafts are rotating.

## Revendications

1. Moteur à turbine à gaz avec un logement de palier (6) pour un arbre de turbine (1, 2), prévu à l'intérieur (10) de la turbine et étanchéifié par des éléments d'étanchéité (8a, 8b), et avec une conduite d'évacuation (11) pour l'huile lubrifiante amenée dans le logement de palier (6), en particulier directement appliquée sur le(s) palier(s) (4a, 4b) qui y est/sont placé(s), **caractérisé en ce que** l'unique conduite d'évacuation (11) débouchant dans une chambre collectrice d'huile lubrifiante a une telle section transversale, et que les éléments d'étanchéité (8a, 8b) ont un tel pouvoir d'étanchéification que la pression dans le logement de palier (6) est pour l'essentiel égale à celle régnant dans la chambre collectrice d'huile lubrifiante, et au maximum égale à la moitié de celle régnant à l'intérieur (10) de la turbine.

2. Moteur à turbine à gaz selon la revendication n° 1 avec deux paliers (4a, 4b) arrangés dans le logement de palier (6) dont l'un est prévu pour l'arbre de turbine haute pression (2) et l'autre pour l'arbre de turbine basse pression (1) du moteur, sachant qu'un dispositif d'étanchéité hydraulique (5) est prévu entre ces deux arbres (1, 2), avec l'arbre de turbine haute pression (2) situé à l'extérieur dans le sens radial (R) par rapport à l'axe de rotation (3) de l'arbre présentant un espace annulaire (5a) qui, sur le pourtour de l'arbre, s'étend vers l'extérieur dans le sens radial, et dans lequel fait saillie l'arbre de turbine basse pression (1) situé à l'intérieur dans le sens radial (R) par rapport à l'axe de rotation (3) de l'arbre avec une nervure (5b) qui sur le pourtour de l'arbre s'étend vers l'extérieur dans le sens radial, et qui - sous l'effet centrifuge lors de la rotation des arbres de turbine - est rempli, à la manière d'un siphon, à travers une zone d'entrée, d'huile lubrifiante (5c) acheminée du logement de palier (6) au moins dans la zone de l'extrémité libre de la nervure (5b).
